# EUROPEAN PATENT SPECIFICATION

(11) **EP 2 963 629 B1**
(45) Date of publication and mention of the grant of the patent: **29.08.2018**
(21) Application number: 15171290.8
(22) Date of filing: 09.06.2015
(51) Int. Cl.: G08B 29/00, H04L 12/28

(54) **SYSTEM AND METHOD OF PROVIDING CONTEXT SENSITIVE HELP FOR ALARM SYSTEM INSTALLATION**
SYSTEM UND VERFAHREN ZUR BEREITSTELLUNG KONTEXTABHÄNGIGER HILFE FÜR EINE ALARMANLAGENINSTALLATION
SYSTÈME ET PROCÉDÉ DE FOURNITURE D'AIDE SENSIBLE AU CONTEXTE POUR L'INSTALLATION D'UN SYSTÈME D'ALARME

(30) Priority: 02.07.2014 US 201414322197
(43) Date of publication of application: 06.01.2016
(73) Proprietor: Honeywell International Inc., Morris Plains, NJ 07950 (US)
(72) Inventor: PARK, Arthur Tony, Morristown, NJ New Jersey 07962-2245 (US); RAESIDE, Russell, Morristown, NJ New Jersey 07962-2245 (US); PROBIN, Robert John, Morristown, NJ New Jersey 07962-2245 (US)
(74) Representative: Houghton, Mark Phillip

(56) References cited:
- EP-A1- 2 124 206
- EP-A2- 1 204 275
- EP-A2- 1 746 766

## Description

### FIELD

The present invention relates generally to the installation of alarm systems. More particularly, the present invention relates to a system and method of providing context sensitive help for alarm system installation.

### BACKGROUND

Installing a commercial alarm system is a complex process that is often undertaken via a simple user interface that consists of a keypad with sixteen keys and a 2x16 character alphanumeric LCD display. However, in some cases, such a display is insufficient to present and provide fully satisfactory feedback regarding the installation process. Furthermore, in all cases, it is impossible to display explanatory text on such a display.

Patent document number EP1204275A2 describes enhanced television services which are delivered and presented on a network appliance without the need for an enhanced-content enabled television set or set-top box. The enhanced content is decoupled from the television signal (or radio signal), allowing for the presentation of the enhanced content alone on a stand-alone network appliance. The network appliance may be a handheld computing device (e.g. a "palm" computing device), a tablette, a remote control with a display or a digital cellular phone handset with a display. The network appliance is enabled for Internet or Intranet access and is also provided with an infrared transmitter so as to operate as a remote control for a television (or radio) having an infrared beam receiver. Through use of the network appliance, the viewer would be presented with the same enhanced content on the network appliance as would be presented to the viewer if an enhanced content enabled television or set-top box (or radio) were being used.

In view of the above, there is a continuing, ongoing need for an improved system and method for alarm system installation.

The present invention in its various aspects is as set out in the appended claims.

### BRIEF DESCRIPTION OF THE DRAWINGS

FIG. 1 is a flow diagram of a method in accordance with disclosed embodiments; and
FIG. 2 is a block diagram of a system in accordance with disclosed embodiments.

### DETAILED DESCRIPTION

While this invention is susceptible of an embodiment in many different forms, there are shown in the drawings and will be described herein in detail specific embodiments thereof with the understanding that the present disclosure is to be considered as an exemplification of the principles of the invention. It is not intended to limit the invention to the specific illustrated embodiments.

Embodiments disclosed herein include a system and method of providing context sensitive help for alarm system installation. However, it is to be understood that systems and methods disclosed herein do not limit the alarm system or the alarm system user interface. For example, the alarm system can be installed and configured independent of the systems and methods disclosed herein, and the alarm system user interface can function independent of the systems and methods disclosed herein.

Some embodiments disclosed herein can provide context specific installation help, on demand, by employing a smart phone, tablet device, or other personal digital assistant. For example, in some embodiments, a user, for example, an installation engineer, can press a key or a combination of keys on a user interface of the alarm system, for example, a keypad of the alarm system. Upon pressing such key or combination of keys, systems and methods disclosed herein can cause the alarm system and/or the alarm system user interface to communicate with the user's smart phone, tablet device, or other personal digital assistant and cause the smart phone, tablet device, or other personal digital assistant to display thereon certain additional information related to the alarm system. For example, the smart phone, tablet device, or other personal digital assistant can display information, such as installation instructions, help, hints, and/or user tips, related to information that is displayed on the user interface and/or display of the alarm system.

In some embodiments, a user need not press any keys on the user interface of the alarm system to cause the alarm system to communicate with the user's smart phone, tablet device, or other personal digital assistant. Rather, in some embodiments, the alarm system and/or the user interface of the alarm system can continuously, periodically at predetermined intervals, and/or upon detecting a predetermined condition, communicate with the user's smart phone, tablet device, or other personal digital assistant and cause the smart phone, tablet device, or other personal digital assistant to display thereon certain additional information related to the alarm system.

In accordance with disclosed embodiments, executable control software can run in or on the alarm system and/or the user interface of the alarm system. Such software can facilitate a connection to and communication with a user's smart phone, tablet device, or other personal digital assistant. For example, the executable control software disclosed herein running on the alarm system can cause the alarm system to transmit information to the user's smart phone, tablet device, or other personal digital assistant. In some embodiments, the connection and communication between the alarm system and the user's smart phone, tablet device, or other personal digital assistant can include any communication path that is supported by both the alarm system and the user's device as would be known by one of ordinary skill in the art. For example, the communication path can include SMS messaging or TCP/IP via local networks, such as WiFi or Bluetooth, or via the Internet, including WiFi or 3G.

In accordance with disclosed embodiments, a software application can run on the user's smart phone, tablet device, or other personal digital assistant. Such a software application can facilitate the connection to and communication with the alarm system and can process data received from the alarm system. For example, the software application disclosed herein running on the user's smart phone, tablet device, or other personal digital assistant can interpret data or other information received from the alarm system to identify and display corresponding additional information, for example, help files or the like that correspond to data or information received from the alarm system.

In accordance with disclosed embodiments, a server can store the corresponding additional information, for example, in a database, and the corresponding additional information can be identified by cross-referencing the information received from the alarm system. In some embodiments, the server can run locally on the user's smart phone, tablet device, or other personal digital assistant. However, in some embodiments, the server can include a remote server that can be accessed in real time, via wireless communication, by the smart phone, tablet device, or other personal digital assistant.

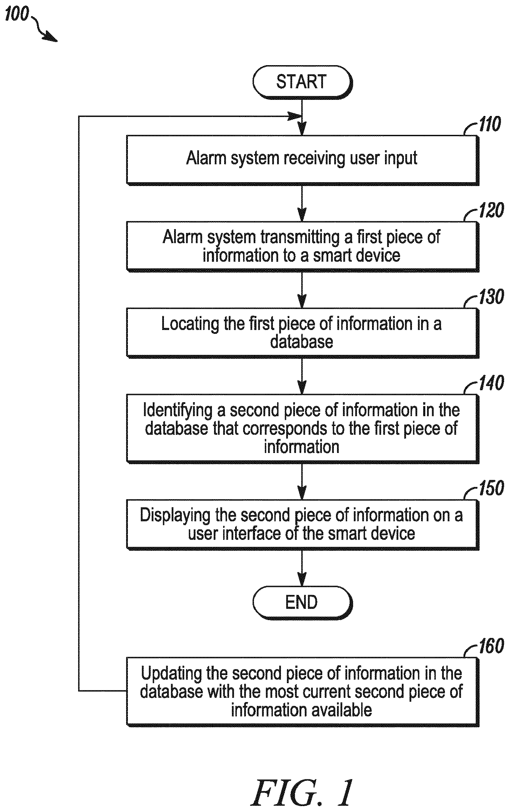

FIG. 1 is a flow diagram of a method 100 in accordance with disclosed embodiments. As seen in FIG. 1, the method 100 can include an alarm system receiving user input as in 110. Responsive to receiving the user input as in 110, the method 100 can also include the alarm system transmitting a first piece of information to a user's smart device, for example, a smart phone, tablet device, or other personal digital assistant, as in 120. In some embodiments, the first piece of information can include information about the current state of the alarm system and/or the user interface of the alarm system and/or at least some information currently displayed on the user interface of the alarm system and/or an alternative representation of the information currently displayed on the user interface of the alarm system.

In some embodiments, the method 100 can transmit the first piece of information to the user's smart device as in 120 absent the alarm system receiving user input as in 110. For example, in some embodiments, the method 100 can transmit the first piece of information to the user's smart device as in 120 continuously, periodically at predetermined intervals, or upon detecting a predetermined condition, for example, upon detecting that the user's smart device is within a predetermined distance from the alarm system and/or the user interface of the alarm system or upon detecting that the user's smart device has entered a predetermined state. In some embodiments, the user's smart device can receive user input to enter the predetermined state.

Regardless, after the method 100 transmits the first piece of information to the user's smart device as in 120, the method 100 can include locating the first piece of information in a database as in 130 and identifying a second piece of information in the database that corresponds to and/or is associated with the first piece of information as in 140. Then, the method 100 can include displaying the second piece of information on a user interface of the smart device as in 150.

In some embodiments, the method 100 can also include updating the second piece of information in the database with the most current second piece of information available as in 160. Accordingly, the method 100 can continuously provide current second pieces of information rather than outdated information that may no longer be useful or relevant to a user.

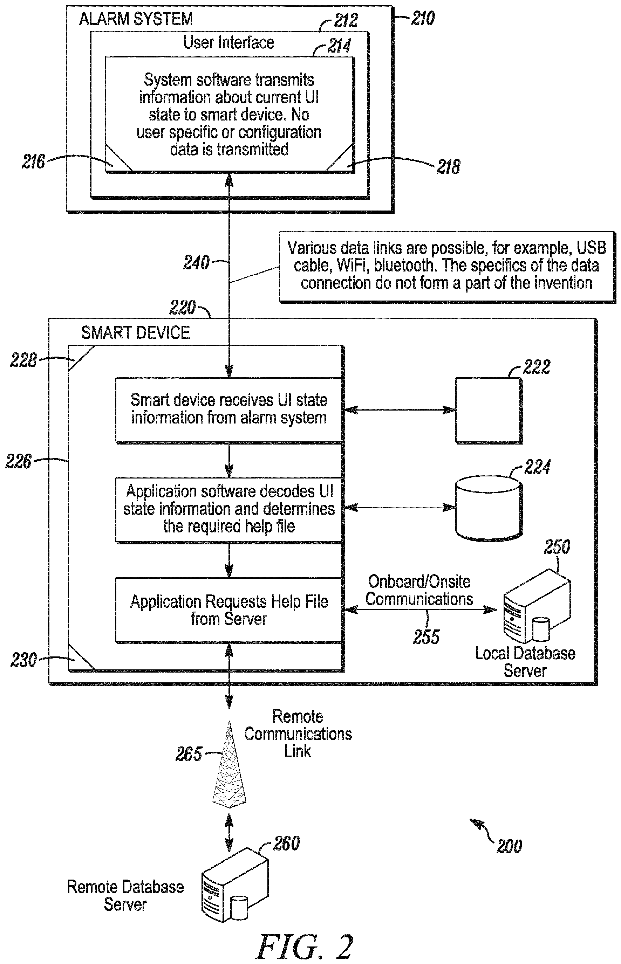

FIG. 2 is a block diagram of a system 200 in accordance with disclosed embodiments. In some embodiments, the system 200 can execute the method 100 of FIG. 1 and others in accordance with disclosed embodiments.

The system 200 can include an alarm system 210 that includes a user interface 212. The user interface 212 can include control circuitry 214, one or more programmable processors 216, and executable control software 218 as would be understood by one of ordinary skill in the art. The executable control software 218 can be stored on a transitory or non-transitory computer readable medium, including, but not limited to, local computer memory, RAM, optical storage media, magnetic storage media, flash memory, and the like. In some embodiments, the control circuitry 214, the programmable processor 216, and/or the executable control software 218 can execute and control at least some of the method 100 and others in accordance with disclosed embodiments.

The system 200 can also include a smart device 220, for example a smart phone, a tablet device, or other personal digital assistant. The smart device 220 can include a user interface 222, a memory device 224, control circuitry 226, one or more programmable processors 228, and an executable control software application 230 as would be understood by one of ordinary skill in the art. The executable control software application 230 can be stored on a transitory or non-transitory computer readable medium, including, but not limited to, local computer memory, RAM, optical storage media, magnetic storage media, flash memory, and the like. In some embodiments, the control circuitry 226, the programmable processors 228, and/or the executable control software application 230 can execute and control at least some of the method 100 and others in accordance with disclosed embodiments.

As seen, responsive to receiving user input and/or continuously, periodically at predetermined intervals, or upon detecting a predetermined condition, the control circuitry 214, the programmable processor 216, and/or the executable control software 218 can transmit information about the current state of the alarm system 210 and/or the user interface 212 of the alarm system 210 to the smart device 220 via a data link 240. For example, the data link 240 can include a USB cable, WiFi, Bluetooth, and the like.

Upon receiving the information from the alarm system 210, the control circuitry 226, the programmable processors 228, and/or the executable control software application 230 can decode the information from the alarm system 210 and identify, determine, and/or locate an information file associated with the information from the alarm system 210. For example, in some embodiments, the control circuitry 226, the programmable processors 228, and/or the executable control software application 230 can access a database, for example, a database stored in the memory device 224 to identify, determine, and/or locate the information file associated with the information from the alarm system 210. Then, the control circuitry 226, the programmable processors 228, and/or the executable control software application 230 can request the information file from a server 250 or 260.

In some embodiments, a server 250 can be stored locally on the smart device 220, and the control circuitry 226, the programmable processors 228, and/or the executable control software application 230 can communicate with the server 250 via onboard and/or onsite communication means 255 as would be understood by one of ordinary skill in the art. However, in some embodiments, a server 260 can be located remotely from the smart device 220, and the control circuitry 226, the programmable processors 228, and/or the executable control software application 230 can communicate with the server 260 via remote communication means 265, for example, wireless communication means such as radio, WiFi, cellular, and the like, or wired communication means such as Ethernet, fiber optics, and the like.

The server 250 or 260 can transmit the requested information file to the control circuitry 226, the programmable processors 228, and/or the executable control software application 230 for displaying information in the requested information file on the user interface 222. Information files stored on the server 250 or 260 can be updated by a user periodically and/or as needed so that the information file transmitted to the control circuitry 226, the programmable processors 228, and/or the executable control software application 230 includes the most current information associated with the information received from the alarm system 210.

Although a few embodiments have been described in detail above, other modifications are possible. For example, the logic flows described above do not require the particular order described, or sequential order, to achieve desirable results. Other steps may be provided, or steps may be eliminated, from the described flows, and other components may be added to, or removed from, the described systems. Other embodiments may be within the scope of the invention.

From the foregoing, it will be observed that numerous variations and modifications may be effected without departing from the invention. It is to be understood that no limitation with respect to the specific system or method described herein is intended or should be inferred. The invention is defined by the claims.

## Claims

1. A method comprising:
an alarm system (210) transmitting (120) a first piece of information responsive to an event, the first piece of information including data displayed on a first user interface (212) of the alarm system or an alternative representation of the data displayed on the first user interface of the alarm system;
a smart device (220) receiving the first piece of information;
identifying and retrieving (140) a second piece of information associated with the first piece of information; and
displaying (150) the second piece of information on a second user interface (222) of the smart device,
wherein the second piece of information comprises installation instructions related to the data that is displayed on the first user interface of the alarm system, and
wherein identifying the second piece of information associated with the first piece of information includes locating the second piece of information stored in a database or on a server and updating (160) the second piece of information stored in the database or on the server.

2. The method of claim 1 wherein the event includes the first user interface receiving (110) user input, and responsive to the first user interface receiving the user input, the alarm system transmitting (120) the first piece of information.

3. The method of claim 1 wherein the smart device (220) receiving the first piece of information responsive to the event includes the alarm system continuously or periodically transmitting the first piece of information.

4. The method of claim 1 wherein the event includes the alarm system detecting a predetermined condition, and responsive to the alarm system detecting the predetermined condition, the alarm system transmitting the first piece of information.

5. The method of claim 4 wherein the alarm system (210) detecting the predetermined condition includes the alarm system detecting the smart device (220) within a predetermined distance of the alarm system.

6. The method of claim 4 wherein the alarm system (210) detecting the predetermined condition includes the alarm system detecting the smart device (220) entering a predetermined state.

7. The method of claim 6 further comprising the second user interface (222) receiving user input instructing the smart device (220) to enter the predetermined state.

8. The method of claim 1 wherein identifying (140) the second piece of information associated with the first piece of information includes cross-referencing the first piece of information in the database or on the server.

9. A system comprising:
a first user interface (212) of an alarm system (210);
a second user interface (222) of a smart device (220);
a programmable processor (228) of the smart device (220); and
executable control software (230) stored on a non-transitory computer readable medium of the smart device (220),
wherein, responsive to an event, the alarm system transmits a first piece of information to the smart device,
wherein the first piece of information includes data displayed on the first user interface or an alternative representation of the data displayed on the first user interface,
wherein the programmable processor and the executable control software are configured to identify and retrieve a second piece of information associated with the first piece of information,
wherein the programmable processor and the executable control software are configured to instruct the second user interface to display the second piece of information,
wherein the second piece of information comprises installation instructions related to information that is displayed on the first user interface of the alarm system,
wherein the second piece of information is in a database stored on a local memory device (224), a local server device (250), or a remote server device (260), and
wherein the programmable processor and the executable control software are configured to identify the second piece of information in the database and retrieve the second piece of information from the database.

10. The system of claim 9 wherein the event includes the first user interface (212) receiving user input, and
wherein the alarm system (210) is configured to transmit the first piece of information responsive to the first user interface receiving the user input.

## Patentansprüche

1. Verfahren, umfassend:
ein Alarmsystem (210), das einen ersten Informationsteil als Reaktion auf ein Ereignis überträgt (120), wobei der erste Informationsteil Daten, die auf einer ersten Benutzerschnittstelle (212) des Alarmsystems angezeigt werden, oder eine alternative Repräsentation der auf der ersten Benutzerschnittstelle des Alarmsystems angezeigten Daten enthält;
eine intelligente Vorrichtung (220), die den ersten Informationsteil empfängt;
Identifizieren und Abrufen (140) eines zweiten Informationsteils, der mit dem ersten Informationsteil assoziiert ist; und
Anzeigen (150) des zweiten Informationsteils auf einer zweiten Benutzerschnittstelle (222) der intelligenten Vorrichtung,
wobei der zweite Informationsteil Installationsanweisungen hinsichtlich der Daten, die auf der ersten Benutzerschnittstelle des Alarmsystems angezeigt werden, umfasst und
wobei Identifizieren des mit dem ersten Informationsteil assoziierten zweiten Informationsteils enthält, den in einer Datenbank oder in einem Server gespeicherten zweiten Informationsteil zu lokalisieren und den in der Datenbank oder in dem Server gespeicherten zweiten Informationsteil zu aktualisieren (160) .

2. Verfahren nach Anspruch 1, wobei das Ereignis enthält, dass die erste Benutzerschnittstelle Benutzereingabe empfängt (110) und das Alarmsystem als Reaktion darauf, dass die erste Benutzerschnittstelle die Benutzereingabe empfängt, den ersten Informationsteil überträgt (120).

3. Verfahren nach Anspruch 1, wobei Empfangen des ersten Informationsteils als Reaktion auf das Ereignis durch die intelligente Vorrichtung (220) enthält, dass das Alarmsystem den ersten Informationsteil kontinuierlich oder periodisch überträgt.

4. Verfahren nach Anspruch 1, wobei das Ereignis enthält, dass das Alarmsystem eine im Voraus bestimmte Bedingung detektiert, und als Reaktion darauf, dass das Alarmsystem die im Voraus bestimmte Bedingung detektiert, das Alarmsystem den ersten Informationsteil überträgt.

5. Verfahren nach Anspruch 4, wobei Detektieren des im Voraus bestimmten Zustands durch das Alarmsystem (210) enthält, dass das Alarmsystem die intelligente Vorrichtung (220) innerhalb einer im Voraus bestimmten Distanz von dem Alarmsystem detektiert.

6. Verfahren nach Anspruch 4, wobei Detektieren der im Voraus bestimmten Bedingung durch das Alarmsystem (210) enthält, dass das Alarmsystem detektiert, dass die intelligente Vorrichtung (220) in einen im Voraus bestimmten Zustand eintritt.

7. Verfahren nach Anspruch 6, ferner umfassend, dass die zweite Benutzerschnittstelle (222) Benutzereingabe empfängt, die die intelligente Vorrichtung (220) anweist, in den im Voraus bestimmten Zustand einzutreten.

8. Verfahren nach Anspruch 1, wobei Identifizieren (140) des mit dem ersten Informationsteil assoziierten zweiten Informationsteils enthält, auf den ersten Informationsteil in der Datenbank oder in dem Server querzuverweisen.

9. System, umfassend:
eine erste Benutzerschnittstelle (212) eines Alarmsystems (210);
eine zweite Benutzerschnittstelle (222) einer intelligenten Vorrichtung (220);
einen programmierbaren Prozessor (228) der intelligenten Vorrichtung (220); und
ausführbare Steuersoftware (230), gespeichert in einem nichtflüchtigen computerlesbaren Medium der intelligenten Vorrichtung (220),
wobei das Alarmsystem als Reaktion auf ein Ereignis einen ersten Informationsteil an die intelligente Vorrichtung überträgt,
wobei der erste Informationsteil auf der ersten Benutzerschnittstelle angezeigte Daten oder eine alternative Repräsentation der auf der ersten Benutzerschnittstelle angezeigten Daten enthält,
wobei der programmierbare Prozessor und die ausführbare Steuersoftware konfiguriert sind, einen mit dem ersten Informationsteil assoziierten zweiten Informationsteil zu identifizieren und abzurufen,
wobei der programmierbare Prozessor und die ausführbare Steuersoftware konfiguriert sind, die zweite Benutzerschnittstelle anzuweisen, den zweiten Informationsteil anzuzeigen,
wobei der zweite Informationsteil Installationsanweisungen hinsichtlich von Informationen, die auf der ersten Benutzerschnittstelle des Alarmsystems angezeigt werden, umfasst,
wobei der zweite Informationsteil in einer Datenbank ist, gespeichert in einer lokalen Speichervorrichtung (224), einer lokalen Servervorrichtung (250) oder einer entfernten Servervorrichtung (260), und
wobei der programmierbare Prozessor und die ausführbare Steuersoftware konfiguriert sind, den zweiten Informationsteil in der Datenbank zu identifizieren und den zweiten Informationsteil aus der Datenbank abzurufen.

10. System nach Anspruch 9, wobei das Ereignis enthält, dass die erste Benutzerschnittstelle (212) Benutzereingabe empfängt, und
wobei das Alarmsystem (210) konfiguriert ist, den ersten Informationsteil als Reaktion darauf, dass die erste Benutzerschnittstelle die Benutzereingabe empfängt, zu übertragen.

## Revendications

1. Procédé comprenant les étapes suivantes :
un système d'alarme (210) transmettant (120) un premier élément d'information sensible à un événement, le premier élément d'information comprenant des données affichées sur une première interface utilisateur (212) du système d'alarme ou une représentation alternative des données affichées sur la première interface utilisateur du système d'alarme ;
un dispositif intelligent (220) recevant le premier élément d'information ;
l'identification et la récupération (140) d'un second élément d'information associé au premier élément d'information ; et
l'affichage (150) du second élément d'information sur une seconde interface utilisateur (222) du dispositif intelligent,
où le second élément d'information comprend des instructions d'installation relatives aux données qui sont affichées sur la première interface utilisateur du système d'alarme, et
où l'identification du second élément d'information associé au premier élément d'information comprend de localiser le second élément d'information stocké dans une base de données ou sur un serveur et de mettre à jour (160) le second élément d'information stocké dans la base de données ou sur le serveur.

2. Procédé selon la revendication 1, dans lequel l'événement comprend la première interface utilisateur recevant (110) l'entrée d'utilisateur et, en réponse à la première interface utilisateur recevant l'entrée d'utilisateur, le système d'alarme transmet (120) le premier élément d'information.

3. Procédé selon la revendication 1, dans lequel le dispositif intelligent (220) recevant le premier élément d'information en réponse à l'événement comprend le système d'alarme transmettant de manière continue ou périodique le premier élément d'information.

4. Procédé selon la revendication 1, dans lequel l'événement comprend le système d'alarme détectant une condition prédéterminée et, en réponse au système d'alarme détectant la condition prédéterminée, le système d'alarme transmettant le premier élément d'information.

5. Procédé selon la revendication 4, dans lequel le système d'alarme (210) détectant la condition prédéterminée comprend le système d'alarme détectant le dispositif intelligent (220) à une distance prédéterminée du système d'alarme.

6. Procédé selon la revendication 4, dans lequel le système d'alarme (210) détectant la condition prédéterminée comprend le système d'alarme détectant le dispositif intelligent (220) passant dans un état prédéterminé.

7. Procédé selon la revendication 6 comprenant en outre la seconde interface utilisateur (222) recevant une entrée d'utilisateur donnant pour instruction au dispositif intelligent (220) de passer dans l'état prédéterminé.

8. Procédé selon la revendication 1, dans lequel l'identification (140) du second élément d'information associé au premier élément d'information comprend de recouper le premier élément d'information dans la base de données ou sur le serveur.

9. Système comprenant :
une première interface utilisateur (212) d'un système d'alarme (210) ;
une seconde interface utilisateur (222) d'un dispositif intelligent (220) ;
un processeur programmable (228) du dispositif intelligent (220) ; et
un logiciel de commande exécutable (230) stocké sur un support non transitoire lisible par ordinateur du dispositif intelligent (220),
où, en réponse à un événement, le système d'alarme transmet un premier élément d'information au dispositif intelligent,
où le premier élément d'information comprend des données affichées sur la première interface utilisateur ou une représentation alternative des données affichées sur la première interface utilisateur,
où le processeur programmable et le logiciel de commande exécutable sont configurés pour identifier et récupérer un second élément d'information associé au premier élément d'information,
où le processeur programmable et le logiciel de commande exécutable sont configurés pour donner pour instruction à la seconde interface utilisateur d'afficher le second élément d'information,
où le second élément d'information comprend des instructions d'installation relatives à des informations qui sont affichées sur la première interface utilisateur du système d'alarme,
où le second élément d'information se situe dans une base de données stockée sur un dispositif de mémoire locale (224), un dispositif de serveur local (250) ou un dispositif de serveur distant (260), et
où le processeur programmable et le logiciel de commande exécutable sont configurés pour identifier le second élément d'information dans la base de données et récupérer le second élément d'information de la base de données.

10. Système selon la revendication 9, dans lequel l'événement comprend la première interface utilisateur (212) recevant une d'entrée d'utilisateur, et
où le système d'alarme (210) est configuré pour transmettre le premier élément d'information en réponse à la première interface utilisateur recevant l'entrée d'utilisateur.
